# EUROPÄISCHE PATENTSCHRIFT

(11) **EP 0 883 441 B1**
(45) Veröffentlichungstag und Bekanntmachung des Hinweises auf die Patenterteilung: **12.06.2002**
(21) Anmeldenummer: 97917248.3
(22) Anmeldetag: 26.02.1997
(51) Int. Cl.: B03B 9/06, B29B 17/02

(54) **VERFAHREN UND ANLAGE FÜR DIE SORTENGERECHTE AUFBEREITUNG VON WERTSTOFFABFÄLLEN**
PROCESS AND FACILITY FOR TREATING AND SORTING RECYCLABLE WASTE MATERIALS
PROCEDE ET INSTALLATION POUR TRAITER ET TRIER DES DECHETS DE MATIERES REVALORISABLES

(30) Priorität: 28.02.1996 DE 19607386
(43) Veröffentlichungstag der Anmeldung: 16.12.1998
(73) Patentinhaber: F & P Sortiertechnik GmbH, 95028 Hof (DE)
(72) Erfinder: Fiedlschuster, Thomas, 95028 Hof (DE); Pilz, Harald, 09122 Chemnitz (DE)
(74) Vertreter: Schneider, Manfred, Dipl.-Ing.
(86) Internationale Anmeldenummer: DE9700376
(87) Internationale Veröffentlichungsnummer: WO9731716

(56) Entgegenhaltungen:
- EP-A- 0 074 346
- AT-A- 363 051
- DE-A- 4 125 164
- DE-A- 4 222 379
- DE-A- 4 300 870
- DE-A- 4 306 781
- BWK BRENNSTOFF WARME KRAFT, Bd. 44, Nr. 3, März 1992, DUSSELDORF DE, Seiten S53-S56, XP000261357 RÜDIGER SCHRÖDER: "Vermischte Kunststoffabfälle trennen und verwerten"

## Beschreibung

Die Erfindung bezieht sich auf ein Verfahren und eine Anlage für die sortengerechte Aufbereitung von Wertstoffabfällen, mit einer einleitenden Selektion von scheren Störstoffen, mit einem Zerkleinerungsprozeß für den verbleibenden Rohabfall, mit Abscheideprozessen für unterschiedliche Wertstoffe aus dem zerkleinerten Rohabfall bis zu einem Gemisch aus Kunststoffschnitzeln und mit Trennprozessen für die Gewinnung möglichst sortenreiner Kunststoffe.

Verfahren zur Aufbereitung von Industrie-, Gewerbe- und /oder Haushaltabfällen, insbesondere von Wertstoffabfällen, der eingangs beschriebenen Art sind in unterschiedlichen Variationen bekannt.

So beschreibt das DE 43 00 870 ein Verfahren zum Sortieren von Wertstoffmüll.
Unter Wertstoffmüll versteht man hier Abfälle aus Eisen, Glas, Nichteisenmetallen, Papier, Kunststoff und ähnlichem.
Der Sortiervorgang beginnt mit dem Abscheiden von Eisen mit Hilfe eines Magnetabscheiders.

Alle übrigen Stoffe werden anschließend mittels Schredder zerkleinert.
Diesem Vorgang folgt das Aufschwemmen des zerkleinerten Mülls mit Wasser.

Durch eine Schwimm-Sinktrennung werden Glas und Bestandteile, die schwerer sind als Wasser, abgeschieden. Auf einem nachgeordneten Schwingförderer wird auf der Basis der differenzierten spezifischen Dichte zwischen Kunststoff und anderen Wertstoffen unterschieden.

Ein solches Verfahren ist unbefriedigend. Mit der Magnetabscheidung ist man nicht in der Lage, Steine und ähnliche harte Stoffe vollständig auszuscheiden. Die Steine oder Nichteisenmetalle werden durch einen Magnetabscheider nicht separiert.

Die im Abfall verbleibenden harten Gegenstände, die schweren Störstoffe, gelangen bei der Zerkleinerung mit in den Schredder. Die Werkzeuge zum Zerkleinern werden sehr schnell stumpf oder brechen gar aus. Häufige Stillstandszeiten, verbunden mit langen Suchaktionen nach diesen Gegenständen, behindern einen kontinuierlichen Verarbeitungsablauf.

Der Grad der Zerkleinerung bleibt unter diesen Umständen objektiv begrenzt. In vielen Fällen muß zu einem späteren Zeitpunkt ein weiterer Zerkleinerungsvorgang eingefügt werden.

Die Ursache weiterer Mängel ist offensichtlich auch die Reihenfolge der nachgeordneten Trennvorgänge. Mit dem Aufschwemmen von zerkleinertem Müll in Wasser trennt man die etwa handtellergroßen Abfallschnitzel in Abhängigkeit von der Dichte des Wassers.

Für die Abscheidung unterschiedlicher Schnitzel aus Eisen, Nichteisenmetallen, Steinen und Glas muß man im Nachgang wiederholte Abscheidungsvorgänge, die unter Umständen sehr aufwendig sein können, durchführen.

Vor der Mehrzahl dieser Abscheidevorgänge, ist es in der Regel unumgehbar den Abfallschnitzeln das Wasser soweit als möglich zu entziehen. Trocknungsprozesse erfordern zusätzliche Anlagen und die Zuführung einer großen Menge von Energie.

Die Weiterverarbeitung der Leichtstoffe erfolgt bei diesem Verfahren mit Hilfe eines Schwingförderers.
Die Trennung, z.B. zwischen Kunststoff und Papier ist hinsichtlich der Reinheit unbefriedigend.
Vor der Weiterverarbeitung der Kunststoffteile, im Sinne ihrer Trennung in Kunststoffsorten, ist eine nochmalige Zerkleinerung der Kunststoffschnitzel und gegebenenfalls ein Waschvorgang nicht auszuschließen.

Der Aufwand für ein solches Verfahren ist hoch. Das Ergebnis ist in der Summe nach wie vor unbefriedigend.

Durch die DE 42 22 379 A1 wird ein Verfahren zur Abfallaufbereitung vorgeschlagen. Das Verfahren beginnt mit dem Sieben des Rohmülls in unterschiedliche Fraktionen auf der Basis der Korngröße.

Die den Aufbereitungsprozeß störenden übergroßen Rohmüllteile werden durch manuelle Sichtung erfaßt und entfernt.
Nach dem Zusammenführen der mittleren und gesichteten und von Störteilen befreiten, übergroßen Kornfraktionen erfolgt die Zerkleinerung, das Abscheiden von Eisen, das Sieben in mehrere Größenfraktionen, das Windsichten, das wiederholte Mischen von unterschiedlichen Fraktionen, ein wiederholtes Zerkleinern von Fraktionen und anderen mechanischen Selektionsvorgängen.
Am Ende dieses doch sehr aufwendigen Aufbereitungsprozesses steht noch keine Trennung der Fraktionen in bestimmte wiederverwertbare Rohstoffe.

Solche Trennvorgänge müssen nach einer solchen Aufbereitung zusätzlich durchgeführt werden.

Dieses Verfahren erfordert mehrere Siebvorgänge. Allen diesen Siebvorgängen müssen zur Sicherung einer kontinuierlichen Arbeitsweise energieaufwendige Trocknungsvorgänge vorangestellt werden.
Dieses Verfahren zur Aufbereitung von Abfällen ist extrem teuer.
Die große Zahl von Vorgängen, bei denen mechanische Zerkleinerungs- und Selektionsvorgänge mit trockenem Material durchgeführt werden, belastet die Umwelt im erheblichen Maße.
Die notwendigen, leistungsfähigen Luftreinigungsanlagen verteuern das Verfahren zusätzlich.

Mit der DE 43 06 781 A1 ist ein weiteres Verfahren zum Aufbereiten von kunststoffreichen Müllgemischen bekannt geworden.
Bei diesem Verfahren wird der vereinzelte Müll - wie oben bereits beschrieben - gesiebt und manuell von Störstoffen befreit.
Dieses Müllgemisch wird dann einer Rotorschere zugeführt und zerkleinert. Diesem Vorgang folgt eine Windsichtung, mit der das Gemisch in Schwer- und Leichtgut aufgeteilt wird.
Aus dem Schwergut scheidet man in mehreren Verfahrensschritten zunächst die Metalle ab.
Das verbleibende Schwergut und das Leichtgut werden dann einem weiteren Zerkleinerungsprozeß und dann den Trennvorgängen zugeführt, in denen dann die einzelnen Kunststoffsorten separiert werden.

Auch dieses Verfahren hat entscheidende Nachteile. Störteile manuell aus dem Rohmüll auszulesen ist vor allem auf Dauer nicht zumutbar. Das vorgeschaltete Sieben des Rohmülls vereinfacht den manuellen Prozeß des Auslesens zwar, aber die Sicherheit, daß Störteile, insbesondere große Steine, vor dem Zerkleinerungsprozeß vollständig entfernt sind, ist nach wie vor nicht gegeben.
Havariefälle an der Rotorschere treten häufig auf und verursachen oft lange Maschinenstillstände, in denen die Störteile in großen Müllspeichern manuell gesucht und entfernt werden müssen.
Die Werkzeuge der Zerkleinerungsanlage verschleißen auch trotz Kühlung schnell und müssen häufig ersetzt werden.
Der Grad der Zerkleinerung muß deshalb in der ersten Stufe gering bleiben. Ein zweiter Zerkleinerungsvorgang nach dem Abscheiden von Metallen ist unumgehbar.

Nachteilig ist auch, daß beim Zerkleinerungsprozeß eine erhebliche Staubentwicklung auftritt. Das erfordert eine aufwendige Abschirmung der Anlage sowie leistungsfähige Luftaufbereitungsanlagen.
Die angeschlossene Windsicht-Anlage erfordert zusätzlich einen vergleichbaren Aufwand.

Die Erfahrungen haben gezeigt, daß bei dieser Arbeitsweise organsiche Bestandteile des Mülls mindestens bis zur ersten Schwimm-Sink-Trennanlage anhaften. Gleiches trifft auf Etiketten und andere lösbare Bestandteile des Rohabfalles zu. Die Qualität der Trennung der Wertstoffe läßt viele Wünsche offen.

Durch die AT-PS 363 051 ist ein weiteres Verfahren zur Aufbereitung von Wertstoffabfall bekannt geworden. Hier wird nach einem anfänglichen Waschprozeß in einer Trommelwaschanlage der gewaschene Rohmüll in einen Schwimm-Sinkbehälter (Flottationsbehälter) eingebracht. Dort sinken alle Bestandteile des Mülls, die schwerer sind als Wasser, zu Boden und werden von dort aus dem Prozeß der stofflichen Aufbereitung herausgenommen. In der Regel gehören dazu auch die schweren Störstoffe. Damit werden auch nahezu alle vereinzelten Teile aus Kunststoffen und anderen Wertstoffen, die regelmäßig schwerer sind als Wasser als nicht nutzbar aus dem Prozeß ausgeschieden.

Andererseits bleiben aber auch schwere Störteile im Prozeß. Das sind solche, die z.B. in Folien verschlungen sind, in denen sich (unterstützt durch die verwendeten Schaummittel) auch große Luftblasen befinden. Diese Einheiten schwimmen obenauf und gelangen auch zur Zerkleinerungsanlage. Sie verursachen dort die bereits beschriebenen Probleme.

Im Prozeß verbleiben aber auch Flaschen, Dosen und andere Hohlkörper oder schwimmende Stoffe, wie Holzteile, Pappen, Textilien u.a.m. Diese stören zwar nicht den Zerkleinerungsvorgang aber ihre Schnitzel gelangen zwingend mit in den Trennprozeß für die Kunststoff-Fraktionen nach dem Schwimm-Sink-Prinzip.
Die dort abgeschiedenen Kunststoffe sind unsauber und lassen sich nur mit Wertverlusten weiter verarbeiten.

Damit ist auch dieses Verfahren nicht geeignet, die rationelle Aufbereitung des Wertstoffabfalles zu gewährleisten und qualitativ hochwertige Kunststoffe zurückzugewinnen.

In der Zeitschrift BWK Brennstoff Wärme Kraft 3/92, Seiten 53 bis 56 ist ein Verfahren beschrieben, bei dem die Störstoffe manuell ausgelesen werden.

Ein Magnetabscheider erfaßt einen Teil der leichten Eisenteile. Dem folgt eine Vorzerkleinerung auf handtellergroße Stücke.
Nach einem Waschvorgang in Wasser, in dem absinkende Stoffe ausgeschieden werden die nicht absinkenden, die schwimmenden Stoffe im nassen Zustand einer zweiten Mühle zugeführt.
Hier erfolgt die Zerkleinerung auf eine Teilchengröße die in dem nachfolgenden, sortierenden Hydrozyklon die Trennung in unterschiedliche Kunststoff-Fraktionen ermöglicht.
Die Nachteile des hier geschilderten Verfahrens stimmen im wesentlichen mit denen überein, die bei Betrachtung des AT 363 051 bereits beschrieben wurden. Damit eignet sich auch dieses Verfahren nicht zur Lösung der anstehenden Aufgabe.

Die **Aufgabe** der vorliegenden Erfindung ist es, ein Verfahren zur Aufbereitung von Abfallstoffen und zur Separierung wiederverwertbarer Wertstoffe vorzuschlagen,
- das bei kontinuierlicher Arbeitsweise mit planbarem Wartungsrhythmus,
- bei minimaler Zahl der Verfahrensstufen,
- bei minimaler Umweltbelastung,
- mit einem Minimum an Energie
eine optimale Trennung wiederverwertbarer Rohstoffe ermöglicht.
Diese Aufgabe wird durch die in Anspruch 1 definierte Verfahrensweise auf überraschend einfache Weise gelöst.

Mit der, dem Prozeß vorangestellten Durchwässerung und dem Selektieren der schweren Störstoffe nach der Sinkgeschwindigkeit in einer Querstömung erreicht man, daß aus dem Rohabfall zunächst sämtliche massiven, schweren und harten Störstoffe zuverlässig entfernt werden *und daß der leichtere Rohabfall an einem seitlich entfernten Ort aus dem Abscheidebehälter der Weiterverarbeitung zugeführt werden kann .*
Vor dem Zerkleinerungsprozeß der übrigen Müllbestandteile werden *damit die* Teile, die die Schneiden der Zerkleinerungswerkzeuge zerstören oder abstumpfen können, weitgehend aus dem Prozeß herausgelöst.
Es wird möglich, die Zerkleinerung der leichteren Abfallstoffe *in einer einzigen Prozeßstufe* bis zu einer relativ kleinen, für Abscheide- und Trennprozesse zweckmäßigen Schnitzelgröße zuverlässig zu gewährleisten.
Als weiterer positiver Effekt des Durchwässerns ist das vollständige und / oder zumindest teilweise Ablösen von wasserlöslichen Stoffen und Etiketten zu konstatieren. Nachfolgende Zerkleinerungs-, Abscheide-, Trocken- und Trennprozessse können optimaler gestaltet werden.
Das Zuführen des noch feuchten Gutes zur Zerkleinerungsanlage hat den Vorteil, daß dort der Staubentwicklung entgegengewirkt wird. Die beim Schneidvorgang auftretende Wärmeentwicklung unterstützt den vor dem ersten Abscheideprozeß notwenigen Trocknungsvorgang.

Gleichzeitig sorgt die Flüssigkeit am Rohabfall wirkungsvoll für eine Kühlung der Zerkleinerungswerkzeuge.

Die nachfolgenden Abscheidevorgänge für andere Bestandteile der Abfallmischung sollten vorzugsweise, aber nicht zwingend in der definierten Reihenfolge durchgeführt werden.

Es hat sich als zweckmäßig erwiesen, die durch das Durchwässern und durch das hochgradige Zerkleinern abgelösten Leichtstoffe und Kleinststeile (Sand, Etiketten u. ä.) abzuscheiden, bevor die letzten Metallteile abgeschieden werden.

Zweckmäßig ist es, gemäß Anspruch 2, das Durchwässern und das Abscheiden der schweren Störstoffe in einer Querströmung gleichzeitig in ein- und derselben Flüssigkeit durchzuführen. Dadurch reduziert sich der konstruktive Aufwand für die Anlage und deren Bedienung und Wartung.

Mit der Gestaltung der Zerkleinerungsanlage in der Weise, daß man die Schnitzel von vornherein auf eine Größe von etwa 10 bis 15 mm zerkleinert, nach Anspruch 3, werden optimale Abscheideprozesse gewährleistet und eine zusätzliche Zerkleinerung der Schnitzel vor dem Trennprozeß nach Kunststoffsorten vermieden.

Eine besonders vorteilhafte Form der Abscheidung von Wertstoffen erreicht man dann, wenn man unmittelbar nach dem Zerkleinerungsprozeß, der im feuchten Zustand nahezu staubfrei durchgeführt wird, die Abscheidung aller Eisenbestandteile durchführt.(Anspruch 4)

Die Schnitzel sind durch die in der Zerkleinerungsanlage entstehende Wärme für diesen Vorgang ausreichend trocken. Der Trocknungsprozeß wird während der Magnetabscheidung fortgesetzt, so daß in einer folgenden Anlage zur Abscheidung der Leicht- und Kleinststoffe, wenn überhaupt, nur noch ein geringer Trocknungsaufwand erforderlich ist.
Das nächste Abscheiden, vorzugsweise der Nichteisenmetalle, kann somit bereits unter Abwesenheit von Papier u. dergl. durchgeführt werden, das oft die Oberflächen von Metallteilen bedeckt. Bei Verwendung eines Allmetallabscheiders in der letzten Phase werden auch die, bei der Magnetabscheidung verborgenen Eisenteile mit entfernt.

Die Anlage zur Durchführung des geschilderten Verfahrens ist in Anspruch 5 definiert. Durch die Vorschaltung des Schwergut-Naßabscheiders im Ablauf vor die Zerkleinerungsanlage werden, bei gleichzeitiger Durchwässerung, aus dem Rohabfall die Störstoffe, massive Eisenteile, Steine oder massive Nichteisenteile mit einer sehr hohen Wahrscheinlichkeit bei geringstem Aufwand abgeschieden. *Leichtere Rohabfallteile die jedoch schwerer sind als Wasser verbleiben jedoch im weiter zu verarbeitenden Rohabfall.*
Die dadurch einsetzbare Form bzw. Einstellung der Zerkleinerungsanlage gestattet eine optimale Durchführung der anschließenden Abscheide- und Trennvorgänge.

Die in Anspruch 6 und 7 definierten Anlagenkombinationen für das Abscheiden von Eisen, von Leicht- und Kleinststoffen und von Nichteisenmetallen haben sich in besonders positiver Weise bewährt.

Die Komplettierung des Verfahrens durch die an sich bekannten Anlagen zum Trennen der Kunststoffsorten, nach Anspruch 8, fügt sich ausgezeichnet in den geschilderten Aufbereitungsvorgang ein.

Die Erfindung soll nachstehend an einem Beispiel näher erläutert werden. Die dazugehörige Zeichnung zeigt eine schematische Gesamtdarstellung des erfindungsgemäßen Verfahrens.

Die als Beispiel zu beschreibende Anlage ist vorzugsweise für die Aufbereitung von Mischkunststoffen von Hohlkörpern, von Bechern oder Blistern, von Folien oder von Mischungen aus diesen Fraktionen vorgesehen.

Man kann diese Mischung der Fraktionen als ähnlich der sogenannten "DSD-Spezifikation" bezeichnen.

Diese Anlage ist nicht vorrangig vorgesehen für Fraktionen wie Papierverbundstoffe, Getränkeverbundstoffe oder dergleichen.

Dem Verfahren können Anlagen zum Auflösen von Ballen aus Rohabfall vorgeordnet sein.

Nachgeordnet sind dem beschriebenen Verfahren Anlagen zur Silierung oder Nachtrocknung der Kunststoffkomponenten und Anlagen zur Herstellung von Granulat oder Agglomerat.
Beigeordnet werden der Anlage vorzugsweise Wasseraufbereitungsanlagen 6 für die Schwergut-Naßabscheider 2 und erforderliche Materialsammelbehälter.

Das Verfahren selbst läuft in folgenden Verfahrensschritten ab.
In der ersten Phase wird der Rohabfall vereinzelt. Hierfür werden allgemein übliche, möglichst schwingende Greifer eingesetzt.
Über eine Zuführeinrichtung 1 gelangt der vereinzelte Rohabfall an einem möglichst eng begrenzten Ort fallend in die Flüssikeit eines Schwergut-Naßabscheiders 2.

Nach der Abscheidung des Schwergutes bei 2 gelangt der Rohabfall zur Zerkleinerungsanlage 3. Hier erfolgt die Zerkleinerung des Rohabfalles bis zu einer Schnitzelgröße, bei der die Abscheidung unterschiedlicher Materialien in effektiver Weise realisiert werden kann.

Die nachfolgenden Abscheidungsvorgänge beginnen mit der Eisenabscheidung. Anschließend erfolgt die Trocknung der verbleibenden Fraktionen unter Abtrennung von Papier, von Fasern, von organischen und sandigen Bestandteilen.
Der letzte Schritt der Abscheidevorgänge umfaßt das Abtrennen von Nichteisenmetallen.

Nach diesen Vorgängen erfolgt die Trennung der Kunststoffe nach dem Schwimm-Sinkverfahren. Die dort separierten Kunststoffe werden siliert und anschließend granuliert bzw. agglomeriert.

Im Nachgang sollen die einzelnen Arbeitsschritte nochmals ausführlicher beschrieben werden.

Die vereinzelten Bestandteile des Rohabfalles werden über eine Zuführeinrichtung 1 zunächst einem sogenannten Schwergut-Naßabscheider 2 zugeführt.

In diesem Schwergut-Naßabscheider 2 werden massive Störstoffe, die sehr viel schwerer sind als Wasser und die übrigen Rohabfallstoffe und die in der Regel eine sehr massive Form haben, aus dem Gemisch ausgefällt und in einem separaten, nicht weiter verfolgten Vorgang weiterbehandelt.

Der vom Schwergut befreite Rohabfall, wird kontinuierlich einer Zerkleinerungsanlage 3 zugeführt.

Die während der Zuführung zum und während des Zerkleinerungsprozesses ablaufende Flüssigkeit wird in den Kreislauf des Schwergut-Naßabscheiders 2 zurückgeführt.

Die an dem Rohabfall verbleibende Restfeuchte beeinflußt den nachfolgenden Zerkleinerungsprozeß in positiver Weise.
Die Staubentwicklung wird bei diesem Verfahrensschritt deutlich reduziert.
Einer Erhitzung des Materials wird in der Zerkleinerungsanlage in effektiver Weise entgegengewirkt.

Die Zerkleinerung des Rohabfalles kann unter diesen Bedingungen auf eine Schnitzelgröße orientiert werden, die ein Optimum für die nachfolgenden Abscheideprozesse darstellen.
Als durchschnittliche Größe soll hier eine Schnitzelgröße von 10 - 20 mm im Mittel von etwa 12 mm angestrebt werden.

Während des Zerkleinerns der Abfälle erfolgt bei der vorhandenen Wärmeentwicklung beim Schneidprozeß auch eine weitgehende Trocknung dieser zerkleinerten Fraktion.

Von diesem Zerkleinerer 3 wird die Fraktion einer gezielten Abtrennung von Eisenmetallen zugeführt.

Diese Anlage arbeitet in an sich bekannter Weise auf dem Prinzip der Magnetabscheidung.

Während dieser Magnetabscheidung 41 führt die im Schnitzelgemisch von der Zerkleinerung her gespeicherten Wärme zu einer weiteren Trocknung.

In der folgenden Abscheidungsstufe werden in einer horizontaler Siebmantelzentrifuge mit automatischer Siebreinigung Papier- und Faserstoffanteile, sowie organische und anorganische Restverschmutzungen weitgehend entfernt.
Die u. a. als Staub, Papier und Fasern hier vorliegenden Störstoffe werden kontinuierlich abgesaugt.

Bei diesem Vorgang lösen sich die durch die Flüssigkeit des Schwergut-Naßabscheiders 2 und durch die Walkarbeit bei der Zerkleinerung abgelösten Papierschichten von Verpackungen und Dosen und werden als überwiegend zerriebener Leichtstoff mit entfernt.
Getrocknete Schmutzpartikel, Staub, Papier, Fasern, Sandkörner u. ä. werden durch den Siebmantel abgeschieden und abgesaugt.
Die sehr stark trächtige Abluft wird gereinigt.
Dabei wird das hohe Aufkommen an Staub, Sand und Leichtstoffen kontinuierlich ausgefiltert und bei S abgeführt.

Das von dieser Anlage 42 austretende Schnitzelgemisch ist jetzt trocken.
Diese verbleibende Schnitzelmischung enthält nunmehr vorwiegend Schnitzel, die von Eisen, Papier, Fasern, Schmutz Sand und ähnlichen Stoffen vollständig befreit sind.

Die trockenen Schnitzel können in einem sogenannten Wirbelstrom- oder Allmetallabscheider 43 so getrennt werden, daß einerseits Kunststoffe und andererseits Metalle M, gleich welcher Form und Gestalt, der Weiterverarbeitung zugeführt werden.
Die Metalle M werden in einem Behälter gesammelt und verlassen so den hier beschriebenen Prozeß.

In der letzten Phase des Verfahrens werden die Kunststoffschnitzel mit, hinsichtlich ihrer Dichte abgestimmten, Flüssigkeit vermischt und nach dem Schwimm-Sinkverfahren voneinander getrennt.

Je nachdem, welche Arten von Kunststoffen vorliegen, erfolgt diese Trennung in einer oder in mehreren Stufen nacheinander bis zur sortenreinen Bereitstellung der unterschiedlichen Kunststoffsorten.

Diese hier vorliegenden Kunststoffe werden dann in üblichen Verfahrensschritten granuliert oder agglomeriert. In dieser Form können die gewonnenen Rohstoffe der üblichen Wiederverwertung in hoher Qualität zugeführt werden.

Die Erfahrung mit diesem Verfahren hat gezeigt, daß, bedingt durch die hohe Zerkleinerung und Reinigung des Rohabfalles zu einem sehr frühen Zeitpunkt, eine hohe Effektivität in den nachfolgenden Abscheideprozessen gewährleistet werden kann.

Die hier beschriebene Reihenfolge der Abscheideprozesse hat sich als äußerst effektiv erwiesen.
Kostspielige, aktive Trocknungsprozesse werden weitgehend eingeschränkt. Die Wärmeentwicklung beim Zerkleinerungsprozeß wird optimal für einen Trocknungsprozeß genutzt.
Die Feuchte ist dort gegeben, wo Staub gebunden werden muß und eine Kühlung erforderlich ist.

Der Aufwand für die Wiederaufbereitung verwendeter Trägermedien, z. B. das Wasser im Schwergutnaßabscheideprozeß oder die Luft in der horizontalen Siebmantelzentrifuge, bleibt auf genau definierte Prozesse beschränkt.

Die Wasseraufbereitungsanlage 6 für den Schwergut-Naßabscheider 2 und die Luftaufbereitungsanlage 7 sind jeweils auf einen optimal abschirmbaren Prozeß ausgerichtet.
Die Umweltbelastung bleibt in kontrollierbaren, begrenzten Größen.

Die hier ablaufenden Prozesse sind überschaubar und hinsichtlich austretender Flüssigkeiten oder hinsichtlich austretender Staub-Luftgemische vertretbar.

Die für die Durchführung des beschriebenen Verfahrens verwendete technische Anlage soll im Nachgang nochmals im Detail beschrieben werden.

Der vereinzelte Rohabfall wird durch die Zuführeinrichtung 1 im Bereich einer eng begrenzten Fläche fallend in die Flüssigkeit des Schwergut-Naßabscheiders 2 gebracht.
Unterhalb der Auftreffzone dieses Rohabfalles ist eine starke Querströmung in der Flüssigkeit vorgesehen. Schwere Rohabfälle durchdringen diese starke Strömung ohne die Fallrichtung deutlich zu verändern.
Leichtere Rohabfälle werden von der Flüssigkeit mitgerissen und an einem seitlich entfernten Ort abgesenkt.

Durch Transportbänder 21,22 werden die unterschiedlich absinkenden Rohabfälle gesondert ausgetragen.

Die leichteren Rohabfälle werden über ein Transportband 22 der Zerkleinerungsanlage 3 zugeführt. Die schweren, massiven Teile werden durch das tiefer angeordnete Transportband 21 abgeführt. Deren Weiterbehandlung wollen wir nicht mehr verfolgen.

Die Flüssigkeit des Naßabscheiders 2 ist in der Regel Wasser. Sie wird so in den Behälter 20 über die Rohrleitung 23 eingeführt, daß unmittelbar unter der Zuführposition des Rohabfalles eine starke Querströmung zum Förderband 22 entsteht.
Die Flüssigkeit des Behälters läuft hinter dem Förderband 22 in eine Wasseraufbereitungsanlage 6 zurück.

Die leichteren Rohabfälle gelangen in den Zerkleinerer 3. Die etwa 12 mm großen Schnitzel aus dem Rohabfallgemisch werden über ein Förderband zum Magnetabscheider 41 geführt.
Die hier abgeschiedenen eisenhaltigen Schnitzel werden bei E gesammelt.

Die im Prozeß verbleibende Schnitzelmischung gelangt bei gleichzeitig fortgesetztem Trocknungsprozeß in den Abscheider 42 für Leicht- und/oder Kleinststoffe.
Diese Anlage 42 ist in der Regel als an sich bekannte, horizontale Siebmantelzentrifuge mit automatischer Selbstreinigung ausgebildet.

Durch die Reibung des dort eingetragenen Gutes an den Siebmantelwänden erfolgt das Abstreifen von Staub, Schmutz, Fasern und Papier .
Die aufgelösten, zerfallenen und flexiblen sowie die kleinkörnigen Bestandteile werden durch den Siebmantel nach außen geschleudert und abgesaugt.
Die größeren, schwereren Kunststoff- und Metallschnitzel werden stirnseitig aus der Siebmantelzentrifuge 42 abgeführt.
Die in der Siebmantelzentrifuge 42 notwendige Luft wird in einem Filter der Luftaufbereitungsanlage 7 gereinigt und der Siebmantelzentrifuge 42 in einem geschlossenen Kreislauf wieder zugeführt. Die Ausgefilterten Stoffe werden bei S gesammelt.

Das so aufbereitete Schnitzelgemisch, das jetzt nahezu vollständig trocken und sauber ist, gelangt in einen Allmetall- oder Wirbelstromabscheider 43, der nach an sich bekannten Verfahren arbeitet.
Hier werden die verbliebenen Metallteile ausgeschieden und an der Position M gesammelt.

Das ausreichend reine Kunststoffschnitzelgemisch gelangt von hier aus zur Kunststoffsortieranlage 51,52. Die Kunststoffsortieranlage besteht aus einer ersten Trennvorrichtung 51, die nach dem Schwimm-Sink-Verfahren arbeitet.

Die leichteste Fraktion 511 wird hier ausgeschieden und für eine Weiterverarbeitung gespeichert.

Die hier abgeschiedene Schwerfraktion 512 wird entwässert, weitgehend bei 513 getrocknet und der nächsten Trennvorrichtung 52 zugeführt.

Die verwendete Trennflüssigkeit hat hier eine andere Dichte. Sie scheidet eine weitere Kunststoffsorte als Leichtfraktion 521 ab.
Die abgetrennte Schwerfraktion 522 kann entweder direkt der Verarbeitung oder einer weiteren, folgenden Trennvorrichtung zugeführt werden.

### Bezugszeichenliste

- 1: Zuführvorrichtung (f. Rohabfall, vereinzelt)

- 2: Schwergut-Naßabscheider
- 20: Behälter
- 21: Schwergutförderer
- 22: Leichtgutförderer
- 23: Wasserzulauf
- 24: Wasserablauf
- 25: Trennblech

- 3: Zerkleinerungsanlage
Abscheider
- 41: Magnetabscheider
- 42: Abscheider f. Leicht- und/oder Kleinststoffe (horizontale Siebmantelzentrifuge)
- 43: Allmetallabscheider/Wirbelstromabscheider
Kunststoffsortieranlage
- 51: Trennvorrichtung
- 511: - Austrag f. Leichtfraktion
- 512: - Austrag f. Schwerfraktion
- 513: - - Trockner
- 52: Trennvorrichtung
- 521: - Austrag f. Leichtfraktion
- 522: - Austrag f. Schwerfraktion

- 6: Wasseraufbereitung
- 7: Luftaufbereitung

- E: Eisenfraktion
- S: Fraktion aus Papier, Faser, Schmutz, Staub und Sand
- M: Metallfraktion (Vorzug: Nichteisenmetalle)

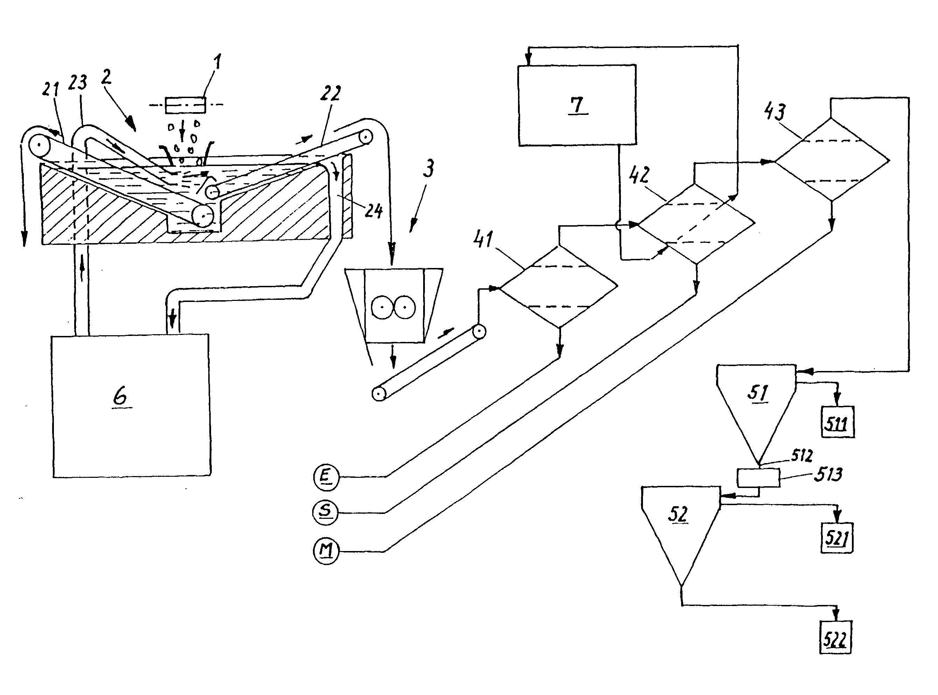

## Patentansprüche

1. Verfahren für die sortengerechte Aufbereitung von Wertstoffabfällen,
- mit einem einleitenden *Waschen des Rohabfalles,*
- *mit einem Vorgang zum Ausscheiden* von schweren Störstoffen aus dem vereinzelten Rohabfall,
- mit einem Zerkleinerungsprozeß für den verbleibenden Rohabfall,
- mit Abscheideprozessen für unterschiedliche Wertstoffe, *einschließlich der unterschiedlichen Kunststoffsorten*, aus dem Gemisch nach dem Schwimm-Sink-Verfahren,
**gekennzeichnet durch** folgende Verfahrensschritte:
a) Durchwässern des vereinzelten Rohabfalles in einer Flüssigkeit mit dem Ziel des Auf-, An- und Ablösens löslicher Bestandteile,
b) Abscheiden schwerer Störstoffe in einer *starken,* horizontalen Flüssigkeitsströmung, *unterhalb einer Einfüllöffnung in einem Abscheidebehälter*, in Abhängigkeit von der Sinkgeschwindigkeit, *und zwar derart, daß leichtere Rohabfälle an einem seitlich entfernten Ort abgesenkt werden*,
c) Fördern des von schweren Störstoffen befreiten, abgesenkten feuchten Rohabfalles *aus dem Abscheidebehälter* zur Zerkleinerungsanlage,
d) Zerkleinern des feuchten Rohabfalles bei gleichzeitiger Trocknung **durch** die Zerkleinerungswärme auf eine Schnitzelgröße von kleiner 55 mm,
e) Abscheiden von *nicht zu den Kunststoffen gehörenden* Wertstoffen *aus dem geschnitzelten Rohabfall* bis zu dem Gemisch aus unterschiedlichen Runststoffsorten,
- in mindestens einem Verfahrensschritt zum Abscheiden von Kleinst- und Leichtststoffen, insbesondere von Faserstoffen, von Silizium-Verbindungen und von organischen Verunreinigungen, und
- in mindestens einem Verfahrenschritt zum Abscheiden von Metallen, *und*
f) Trennen des Gemisches aus unterschiedlichen Kunststoffsorten nach dem Schwimm-Sink-Verfahren in Abhängigkeit von der Dichte.

2. Verfahren nach Anspruch 1, **dadurch gekennzeichnet, daß** das Durchwässern des Rohabfalles und das Selektieren der schweren Störstoffe in einem einzigen Arbeitschritt in der gleichen Flüssigkeit erfolgt.

3. Verfahren nach Anspruch 1 oder 2, **dadurch gekennzeichnet,**
**daß** der feuchte Rohabfall in Schitzel einer Größe von 10 bis 15 mm zerkleinert wird.

4. Verfahren nach Anspruch 1 oder 2, **dadurch gekennzeichnet,**
**daß** nach dem Zerkleinern des Rohabfalles aus dem
dann vorliegenden Gemisch das Abscheiden von Wertstoffen so erfolgt, daß
- zunächst das Eisen,
- dann die Leicht- und Kleinststoffe und
- letztendlich das Resteisen und die Nichteisenmetalle abgeschieden werden.

5. Anlage zum sortengerechten Aufbereiten von Wertstoffabfällen, enthaltend
- *eine Anordnung zum Durchwässern und Waschen des Rohabfalles,*
- eine Anordnung zum *Abscheiden* schwerer Störstoffe, *in einem Flüssigkeitsbehälter,*
- mindestens eine Zerkleinerungsanlage (3) für den Rohabfall *nach der Anordnung* zum *Abscheiden schwerer Störstoffe*,
- mindestens einen Metallabscheider (43,41),
- mindestens einen Abscheider (42) für Leicht- und/oder Kleinststoffe und
- mindestens eine Anlage zum sortengerechten Trennen von Kunsstoffschnitzeln
- zur Durchführung des Verfahrens nach einem der Ansprüche 1 bis 4,
**dadurch gekennzeichnet,**
**daß** für das Durchwässern des Rohabfalls und für das *Ausscheiden* schwerer Störstoffe *sowie für das Absenken von leichteren Rohabfällen an* einem *seitlich entfernten Ort* ein Schwergut-Naßabscheider (2), *mit einem die horizontale Strömung unterhalb der Einfüllzone des Abscheidebehälters verstärkenden Wasserzulauf (23),* der Zerkleinerungsanlage (3) vorgeordnet ist,
***daß** eine Einrichtung zum Fördern des von schweren Störstoffen befreiten, abgesenkten Rohabfalls aus dem Abscheidebehälter zur Zerkleinerungsanlage vorgesehen ist,*
**daß** die Zerkleinerungsanlage (3) mit einer Mindestzerkleinerung von 55mm auf eine Schnitzelgröße von kleiner 20 mm einrichtbar ist *und*
***daß** in der Prozeßlinie zwischen der Zerkleinerungsanlage (3) und der Anlage (51, 52) zum sortengerechten Trennen von Kunsstoffschnitzeln mindestens ein Metallabscheider(41, 43) und ein Abscheider (42) für Leicht- und* /*oder Kleinststoffe eingefügt sind.*

6. Anlage nach Anspruch 5, **dadurch gekennzeichnet, daß** der Zerkleinerungsanlage (3)
- ein Magnetabscheider (41) für das Abscheiden von Eisen,
- eine horizontale Siebmantelzentrifuge mit automatischer Reinigung (42) für das Abscheiden von Kleinst- und Leichtstoffen, insbesondere von Papier- und Faserstoffanteilen, sowie organischer und anorganischer Restverschmutzungen, und
- ein Allmetallabscheider (43) für das Abscheiden verbliebener Metallschnitzel
in dieser Reihenfolge nachgeordnet sind.

7. Anlage nach Anspruch 5 oder 6,
**dadurch gekennzeichnet,**
**daß** anstelle des Allmetallabscheiders (43) ein Wirbelstromscheider vorgesehen ist.

8. Anlage nach einem der Ansprüche 5 bis 7,
**dadurch gekennzeichnet,**
**daß** für das Trennen der Kunststoffsorten mindestens zwei Schwimm-Sink-Trennanlagen (51,52) vorgesehen sind, wobei mindestens der zweiten Schwimm-Sink-Trennanlage (52) ein Flüssigkeitsabscheider und ein Trockner (513) vorgeordnet *sind*.

## Claims

1. Procedure for treating and sorting recyclable waste materials
- with a preliminary washing of the raw waste,
- with a process for the separation of heavy impurities from the singled raw waste,
- with a shredding process for the remaining raw waste,
- with separating processes for different recyclable waste materials, including the different sorts of plastic, from the mixture according to the float-and-sink method,
**characterized by** the following procedural steps:
a) soaking of the singled raw waste in a liquid with the objective of dissolving, preliminary dissolving and removing of soluble components,
b) separating of heavy impurities in a strong horizontal liquid flow below a filling opening in a separating container, due to the sinking speed, and in such a manner that lighter raw waste is deposited at a remote place at the side,
c) conveying of the deposited moist raw waste, which has been removed from heavy impurities, from the separating container to the shredding installation,
d) shredding of the moist raw waste to a chip size of less than 55 mm with simultaneous drying by the shredding heat,
e) separating of recyclable materials not belonging to the plastics from the chipped raw waste until the mixture of different sorts of plastics are obtained,
- in at least one procedural step for the separation of micro and light materials, especially of fibrous materials, silicon compounds and organic contaminants, and
- in at least one procedural step for the separation of metals, and
f) separating of the mixture of different sorts of plastics according to the float-and-sink method dependent upon the density.

2. Procedure in accordance with claim 1, **characterized in**
**that** the soaking of the raw waste and the selecting of the heavy impurities is carried out in one single operation in the same liquid.

3. Procedure in accordance with claim 1 or 2, **characterized in**
**that** the moist raw waste is shredded to chips of a size of 10 to 15 mm.

4. Procedure in accordance with claim 1 or 2, **characterized in**
**that** after the shredding of the raw waste the separating of recyclable materials from the then existing mixture is carried out in such a manner that separates
- at first the iron,
- then the light and micro materials, and
- finally the residual iron and the non-ferrous metals.

5. Facility for treating and sorting recyclable waste materials; including
- an arrangement for the soaking and washing of the raw waste,
- an arrangement for the selective separation of heavy impurities, in a liquid container,
- at least one shredding installation (3) for the raw waste following the arrangement for the separation of heavy impurities,
- at least one metal separator (43, 41),
- at least one separator (42) for light and/or micro materials, and
- at least one installation for the separation of plastics chips according to sort
- for carrying out the procedure in accordance with one of the claims 1 to 4,
**characterized in**
**that** a wet separator for heavy materials (2), with a water intake (23) increasing the horizontal flow below the filling zone of the separating container, is placed before the shredding installation (3) for the soaking of the raw waste and for the separation of heavy impurities as well as for the depositing of lighter raw waste at a remote place at the side,
**that** an installation is provided for the conveying of the deposited raw waste, removed from heavy impurities, from the separating container to the shredding installation,
**that** the shredding installation (3) with a minimum shredding degree of 55 mm can be set to a chip size smaller than 20 mm, and
**that** at least one metal separator (41, 43) and one separator (42) for light and/or micro materials are integrated into the process line between the shredding installation (3) and the installation (51, 52) for the pure separation of plastics chips according to sort.

6. Facility in accordance with claim 5, **characterized in**
**that** the shredding installation (3) is followed in sequence by
- a magnetic separator (41) for the separation of iron,
- a horizontal basket centrifuge with automatic cleaning (42) for the separation of micro and light materials, especially of paper and fibrous material components, as well as organic and inorganic residual contaminants, and
- an all-metal separator (43) for the separation of remaining metal chips.

7. Facility in accordance with claim 5 or 6, **characterized in**
**that** a cyclone separator is provided instead of the all-metal separator (43).

8. Facility according to one of the claims 5 to 7, **characterized in**
**that** at least two float-and-sink separating installations (51, 52) are designated for the separation of the plastics sorts, at which a liquid separator and a dryer (513) are at least placed before the second float-and-sink separating installation (52).

## Revendications

1. Procédé pour traiter et trier des déchets de matières revalorisables,
- qui commence par un lavage des déchets bruts et
- qui est suivi d'un procédé pour extraire les différentes matières dangereuses lourdes des déchets bruts,
- d'un broyage du reste des déchets bruts, ainsi que
- de plusieurs procédés de séparation des matières revalorisables différentes, y compris les différents types de matière plastique, selon le principe par flottant et plongeant,
**caractérisé par** les phases opérationnelles suivantes:
a) Baignage des déchets bruts dans un liquide pour en corroder, dissoudre et détacher les composantes solubles,
b) Séparation des matières dangereuses lourdes dans un fort courant horizontale de liquide, cette opération ayant lieu dans un réservoir séparateur qui se trouve au-dessous d'un orifice de remplissage et en fonction de la vitesse de plongée, de telle sorte que les déchets bruts légers descendent vers un endroit situé à une distance latérale,
c) Transport des déchets bruts humides et déjà exempts de matières lourdes dangereuses du réservoir séparateur à l'installation de broyage,
d) Broyage des déchets bruts humides et, simultanément, séchage de ces déchets en profitant de la chaleur produite par le broyage, les déchets broyés prenant une dimension de moins de 55 mm,
e) Séparation des matières non plastiques des déchets bruts broyés afin d'obtenir un assortiment mélangé de différentes matières plastiques,
- lors d'au moins une phase opérationnelle pour séparer les matières les plus petites et les plus légères, en particulier les matières fibreuses, les composés de silicium et les impuretés organiques, et
- lors d'au moins une phase opérationnelle pour extraire les particules métalliques, ainsi que
f) Séparation du mélange composé de différentes matières plastiques selon le principe par flottant et plongeant, en fonction de la densité.

2. Procédé suivant la revendication 1, **caractérisé par le fait que**
tant le baignage des déchets bruts que le triage des matières dangereuses lourdes sont effectués lors d'une seule phase opérationnelle et dans le même liquide.

3. Procédé suivant la revendication 1 ou 2, **caractérisé par le fait que**
les déchets bruts humides sont broyés en morceaux d'une taille de 10 à 15 mm.

4. Procédé suivant la revendication 1 ou 2, **caractérisé par le fait que**,
après avoir broyé les déchets bruts et après en avoir obtenu un mélange, la séparation des matières revalorisables est effectuée de telle sorte qu'il soient séparés
- d'abord le fer,
- puis les petites matières légères et
- enfin le fer restant et les métaux non ferrés.

5. Installation pour traiter et trier des déchets de matières revalorisables qui comprend
- un dispositif pour baigner et laver les déchets bruts,
- un dispositif pour séparer les matières dangereuses lourdes dans un réservoir à liquide,
- au moins une installation de broyage (3) pour les déchets bruts, après la séparation des matières dangereuses lourdes,
- au moins un séparateur de métaux (43, 41),
- au moins un séparateur (42) pour les matières petites et/ ou légères et
- au moins une installation de triage pour séparer les morceaux des différents types de matière plastique
- afin de réaliser le procédé suivant une des revendications 1 à 4,
**caractérisé par le fait**
**que**, pour permettre le baignage des déchets bruts et la séparation de leurs matières les plus légères dans un endroit situé à une distance latérale, un séparateur humide pour produits lourds (2) avec un afflux d'eau (23) qui renforce le courant horizontal coulant au-dessous de la zone de remplissage du réservoir séparateur, est placé en amont de l'installation de broyage,
**qu'**il est prévu un convoyeur pour assurer le transport des déchets bruts descendus et déjà exempts de matières dangereuses lourdes du réservoir séparateur à l'installation de broyage,
**que** l'installation de broyage (3) peut être mise au point de sorte qu'on puisse réduire la taille minimale des morceaux broyés (55 mm) à moins de 20 mm, et
**que**, dans le déroulement du processus, au moins un séparateur de métaux (41, 43) et un séparateur (42) pour matières légères et / ou très petites sont intercalés entre l'installation de brochage (3) et l'installation pour trier des copeaux (51, 52) .

6. Installation suivant la revendication 5, **caractérisée par le fait**
**que** l'installation de broyage (3) est complétée, dans l'ordre suivant, par
- un séparateur magnétique (41) pour extraire le fer,
- une centrifugeuse à manchon perforé et à nettoyage automatique (42) pour séparer les matières petites et légères, surtout les particules fibreuses et de papier ainsi que les impuretés organiques résiduelles, et
- d'un séparateur tous métaux (43) qui sert à extraire les morceaux métalliques restants.

7. Installation suivant la revendication 5 ou 6, **caractérisée par le fait qu'**il est prévu, au lieu du séparateur tous métaux (43), un séparateur à tourbillonnement.

8. Installation suivant les revendications 5 à 7, **caractérisée par le fait que**, pour trier les différents types de matière plastique, il est prévu l'emploi d'au moins deux séparateurs fonctionnant selon le principe par flottant et plongeant (51, 52), et qu'au moins le deuxième séparateur fonctionnant selon le principe par flottant et plongeant (52) est muni d'un séparateur humide et d'un sécheur (513).
